# EUROPEAN PATENT SPECIFICATION

(11) **EP 2 923 156 B1**
(45) Date of publication and mention of the grant of the patent: **07.10.2020**
(21) Application number: 13791790.2
(22) Date of filing: 12.11.2013
(51) Int. Cl.: F16L 25/00, F24F 13/02, F16L 17/025, F16L 21/035

(54) **SEALING OF JOINTS BETWEEN VENTILATION DUCTS AND FITTINGS**
DICHTUNG FÜR VERBINDUNG ZWISCHEN LUFTKANAL UND ANSCHLUSSSTÜCK
JOINT ÉTANCHE ENTRE UNE GAINE DE VENTILATION ET UN RACCORD

(30) Priority: 13.11.2012 SE 1251289
(43) Date of publication of application: 30.09.2015
(73) Proprietor: Lindab AB, 269 82 Bastad (SE)
(72) Inventor: BERG, Ola, S-260 91 Förslöv (SE); KARLSSON, Lars, S-266 55 Vejbystrand (SE)
(74) Representative: Zacco Sweden AB
(86) International application number: PCT/EP2013/073591
(87) International publication number: WO 2014/076065

(56) References cited:
- EP-A1- 0 999 397
- WO-A1-03/027559
- WO-A2-2008/028969
- US-A- 4 487 421

## Description

### TECHNICAL FIELD

The present invention relates to an arrangement comprising at least one outer ventilation duct, at least one ventilation duct fitting and at least one sealing for sealing a joint between the at least one ventilation duct fitting and the at least one outer ventilation duct.

### BACKGROUND ART

When interconnecting ends of ventilation ducts together and sealing off duct ends by means of end caps or lids or the like, the joint between ventilation ducts and between lid and ducts must be adequately sealed against air leakage into the surroundings. This sealing of joints is usually achieved by means of a sealing.

There are a lot of known ways of sealing different channels and ducts, e.g. ventilation ducts, by using sealing arrangement comprising at least one sealing ring extending radially around the ducts, either around their inner circumference and/or their outer circumference. Circular ventilation ducts are tubes included in ventilation duct systems, the tubes are preferably made of sheet metal and are helically- wound lock seam tubes (for instance of the type "NPU"; "SNPU" and "SR" marketed by the applicant Lindab AB).

The above helically- wound lock seam tubes of sheet metal have a wall thickness from about 0.5 mm to about 1.25 mm depending on the diameter of the tubes. The inventive concept is applicable to ventilation ducts within the diameter range 80 - 315 mm, but it is preferably used for much larger diameters, e.g. 1600 mm.

Special systems for air-proof sealing of joints between tubes for ventilation duct systems have therefore been developed. One example of such a sealing is described in WO 2008/028969 A2. This enclosure uses one sealing ring for fitting onto the outer circumference of an end of an inner tube element to be interconnected with an end of an outer tube in an air-tight way. Another example of a sealing arrangement for a joint between ducts is disclosed in US 4 487 421 A. The sealing arrangement of US 4 487 421 A uses a hard reinforcing ring in its base to limit compressibility of the base when assembled.

EP 0 999 397 A1 discloses an arrangement comprising an outer ventilation duct, a ventilation duct fitting and a sealing for sealing a joint between the outer ventilation duct and the ventilation duct fitting according to the preamble of claim 1.

However, it is still necessary to achieve a more secure air-proof joint between interconnected ventilation ducts of larger diameters, e.g. from about 300 mm in diameter, and between the end caps and the duct ends, for which ducts at least one reinforcement bead is formed helically around the circumference of the ducts and along the length of the ducts with the object of stiffening the ducts as ventilation ducts having large diameters are more limpy than ducts of smaller diameters. In the prior art, the known sealing rings are not able to seal sufficiently against the inside of outer ventilation ducts as the reinforcement bead in the outer duct form a locally larger duct diameter being unreachable by the prior art sealings

### SUMMARY OF THE INVENTION

It is an object of the invention to provide an arrangement comprising a sealing for eliminating air leakage at/in joints between ventilation ducts and between different fittings for such ducts and the ducts themselves, such as cap ends, lids, dampers, diffusers, measuring units, valves, reducers, saddles, bends, tees or the like, which solve, or at least lessen, the problems mentioned above.

The present invention relates to a sealing arrangement in the form of at least one sealing for sealing joints between ventilation ducts having large diameters and ventilation duct fittings. The invention is applied to pipes/tubes in the form of ventilation ducts and ventilation duct fittings with diameters between 315 to 1600 mm.

Yet another object of the invention is to provide a sufficient sealing of joints between ventilation ducts and different types of ventilation duct fittings, which ventilation ducts have duct stiffening/reinforcing beads/ribs along the length and/or radially along their duct circumference improving the air-tightness by reducing air leakage along the duct stiffening/reinforcement beads. Yet another object of the invention is to provide a sufficient air-proof sealing of joints between ventilation ducts and any ventilation fittings, which ventilation ducts have duct stiffening and reinforcing beads/ribs extending continuously in angle/angularly in relation to the longitudinal axis of the ducts and in relation to the radial direction of the ducts eliminating or at least reducing any air leakage at and/or along the duct stiffening/reinforcement beads.

A further object of the invention is to provide a sufficient sealing of joints between ventilation ducts and ventilation fittings, which ventilation ducts have reinforcement beads/ribs extending helically around the duct circumference along the length of the ducts that eliminates both radial and helical air leakage, i.e. both radial air leakage along the circumference of the ventilation duct in a radial plane being substantially perpendicular to the length of the ventilation ducts and helical air leakage along the helically extending reinforcing beads at the joints along the circumference of the ventilation duct are eliminated.

These objects are achieved by an arrangement comprising at least one outer ventilation duct, at least one ventilation duct fitting and at least one sealing for sealing a joint, as claimed in the associated independent claim, preferred variants thereof being defined in the associated dependent claims.

It is an object of the invention to provide an arrangement for a joint between at least one ventilation duct fitting and at least one outer ventilation duct, each outer ventilation duct comprising at least one helically extending reinforcement bead, wherein the sealing arrangement extends continuously around the external circumference of at least one end of the ventilation duct fitting and comprises at least one protrusion extending outwards from the external circumference of the ventilation duct fitting for sealing against the inner circumference of the outer ventilation duct, the sealing arrangement further comprising at least one outer portion at the protrusion, wherein the protrusion and its outer portion are adapted to physically and continuously contact the inner circumference of the ventilation duct and an inner circumference of the reinforcement bead at the joint, which reinforcement bead forms a helically varying diameter of the outer ventilation duct, whereby the sealing arrangement achieves an air-tight seal of the joint between the ventilation duct fitting, the inner circumference of the outer ventilation duct and the helically varying inner duct circumference of the reinforcement bead by means of the protrusion and its outer portion extending in different directions to be able to reach and be in constant physical contact and intimately following the inner circumference of the ventilation duct including its helically varying inner circumference on the inside of the reinforcement bead when the ventilation duct fitting and the outer ventilation duct are interconnected.

The arrangement for eliminating air leakage in/at joints between ventilation ducts and ventilation fittings according to the independent arrangement claim makes it possible to simplify and ensure an effective air-tight seal at the joints after assembly of the associated ventilation ducts with reinforcing beads creating locally larger duct diameters as the outer portion of the protrusion physically reaches and constantly contacts the inner circumference of each helically extending reinforcing bead and each outer duct and fitting during and after interconnection.

According to the invention, each outer portion has at least one free end arranged at a distance from the protrusion, which distance, measured along a plane being substantially in parallel with the longitudinal direction of the ventilation duct fitting, is at least equal to an inner height of the helically varying inner diameter of the reinforcement bead or may be larger. The distance of the free end from the protrusion make it possible to ensure that associated and interconnected ducts of the ventilation system and ventilation duct fittings can have air-proof joints even though helically formed reinforcement beads on the ducts cause locally larger duct diameters extending past the joint and its sealing arrangement as the free end reaches the surfaces and areas to be sealed off.

In other embodiments, the number of protrusions may be at least one or at least two; the number of outer portions may be at least one or at least two; the number of free ends may be at least one or at least two; each outer portion may extend in a direction deviating from the extension plane of the associated protrusion; at least one outer portion may be arranged at each end of each protrusion; a first outer portion at the end of a first protrusion may extend in another direction in relation to a second outer portion arranged at the end of a second protrusion; outer portions at the ends of the protrusions may extend in opposite directions in relation to each other; and the outer portions at the ends of the protrusions may have inverted shapes in relation to each other. The effect of these embodiments is that during and after folding of each protrusion and each outer portion after assembly, the contact between each outer portion is maintained in constant/continuous physical and sealing contact with the inside surfaces of each helical bead and outer duct and outside surfaces of each ventilation fitting without creating any open "holes" or helical channels through which air may leak.

The effect of the invention is that any joints between interconnected ventilation ducts and between such ducts and any ventilation duct fittings, which ventilation ducts have reinforcement beads extending with an angle/angularly in relation to the longitudinal axis of the ducts and in relation to the radial direction of the ducts, e.g. helically along the ducts creating locally larger duct diameters at the joints along the reinforcement bead, are made air-proof.

The sealing according to the invention is made of at least one polymer having a thickness suitable for efficient air-proof sealing of a joint between interconnected ventilations ducts and between ventilation ducts and ventilation duct fittings. This may be done by means of the sealing being formed with a thickness so that when interconnecting the ventilation ducts and interconnecting the ventilation ducts with ventilation duct fittings, the sealing is pliable so that it flexes/bends and follows the contour of the inside of the outer duct and the reinforcement bead. Hence, the sealing is kept/held constantly in an air-tight engagement/contact with the inside of the ventilation duct and the reinforcement bead during the interconnection with ventilation ducts and while the ducts are connected.

The sealing arrangement according to the invention is made of at least one elastic material. The sealing arrangement may be formed with at least one protrusion extending substantially radially or radially in relation to the ventilation duct and each ventilation duct fitting. Each protrusion of the sealing arrangement may extend a distance being sufficiently far from a web of the sealing arrangement and from the outer circumference of a connecting duct and ventilation duct fittings for achieving an efficient air-proof sealing of a joint between interconnected ventilation ducts and ventilation duct fittings. This is done by the sealing being formed with at least one sufficiently long protrusion so that when interconnecting the ventilation ducts and ventilation duct fittings the at least one sealing protrusion follows physically the contour of the inside of the outer duct and the reinforcement bead and/or any other protrusion if more than one protrusion is applied. The sealing is thereby in constant air-tight engagement and contact with the inside of the ventilation duct and the reinforcement bead during the interconnection with ventilation ducts and while the ducts are connected.

The sealing according to the invention is made of at least one elastic material and comprises at least one sealing having at least one protrusion extending outwards and radially from an inner connecting duct and a ventilation duct fitting a distance being sufficiently far. The at least one protrusion has at least one outer portion at at least one free end, which outer portion extends in a direction deviating from the protruding extension plane of the protrusion or may be bent-out or bent-in in relation to the protrusion and its extension plane. This achieves an efficient air-proof sealing of a joint between interconnected ventilations ducts. This may also be done by the sealing being formed with at least one sufficiently long protrusion, which may have at least one free end at at least one outer bent-out, bent-in or outer portion being inclined with another angle in relation to the protrusion. Hence, when interconnecting the ventilation ducts and ventilation duct fittings, the at least one outer portion of the sealing protrusion physically contacts and follows by means of flexing the contour of the inside of the outer duct and the reinforcement bead. The sealing protrusion is thereby kept/held in constant air-tight engagement/contact with the inside of the duct and the reinforcement bead during the interconnection and while ducts are connected.

Examples of an elastic material to be used for manufacturing the sealing arrangement according to the invention are Ethylene Propylene Diene rubber (EPDM), Nitrile rubber, and/or Silicone rubber or combinations of these.

The sealing according to the invention for enabling air-tight joints between interconnected ventilation ducts and ventilation duct fittings, which ventilation ducts are provided with reinforcement beads, eliminates, or at least reduces the air-leakage at the above joints for ventilation ducts having helically extending locally larger duct diameters.

### BRIEF DESCRIPTION OF THE DRAWINGS

The invention will be described in more detail with reference to the appended drawings, which show examples of presently preferred embodiments of the invention.
Figs. 1 to 3 are side views of a prior art sealing used for sealing joints between interconnected ventilation ducts.
Figs. 4 to 6 are side views showing arrangement comprising a sealing according to the invention for air-proof seal of joints between interconnected ventilation ducts.
Fig. 7 shows two side views of a prior art sealing at the top, one top left view and one top right view, and two side views of the sealing according to the invention at the bottom, i.e. one bottom right view and one bottom left view, and one view in the center of Fig. 7 showing a connecting element to the left and an interconnected ventilation duct to the right.
Fig. 8 is a view showing the cross-section of an example of the inventive sealing in Figs. 4 to 6 and in the bottom views in Fig. 7.
Fig. 9 is a side view showing the whole sealing in Fig. 8 separately before assembly onto a ventilation tube connecting element.
Fig 10 is a plan view of the sealing viewed from left to right in Fig. 9.
Figs. 11 to 16 are views showing the cross-section of examples of a sealing according to the invention with small top right schematic views showing similar halves of or mirrored versions of the larger sealing example.
Fig. 17 is a side view showing the whole sealing in Figs. 11 to 16 separately before assembly onto a ventilation tube connecting element.
Fig 18 is a plan view of the sealing in Fig. 17 viewed from left to right.
Figs. 19 to 26 show cross-sections of other examples of the inventive sealing in Figs. 4 to 6, in the bottom views of Fig. 7, and in Figs. 8 to 18.

### DETAILED DESCRIPTION

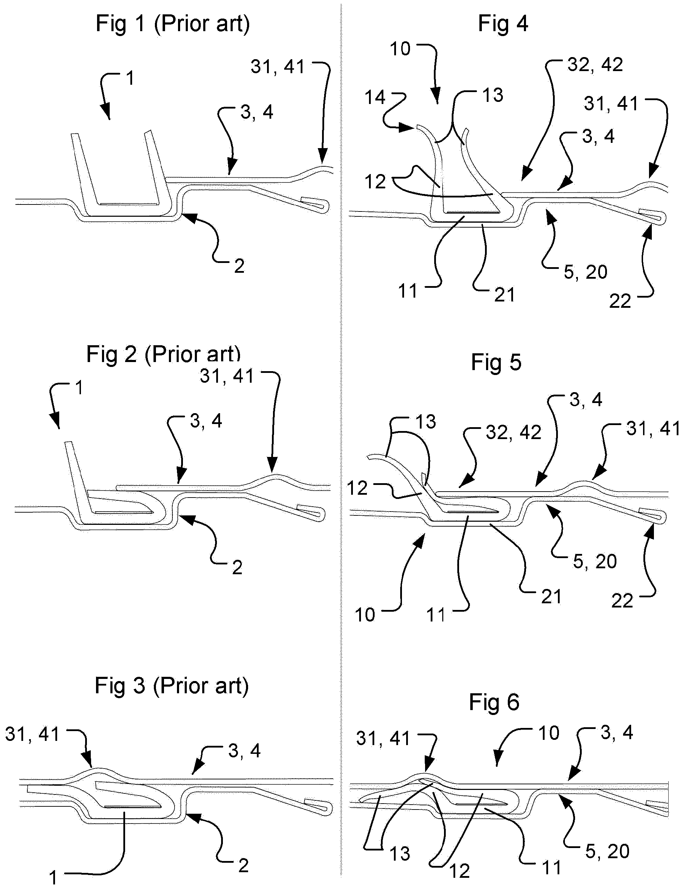

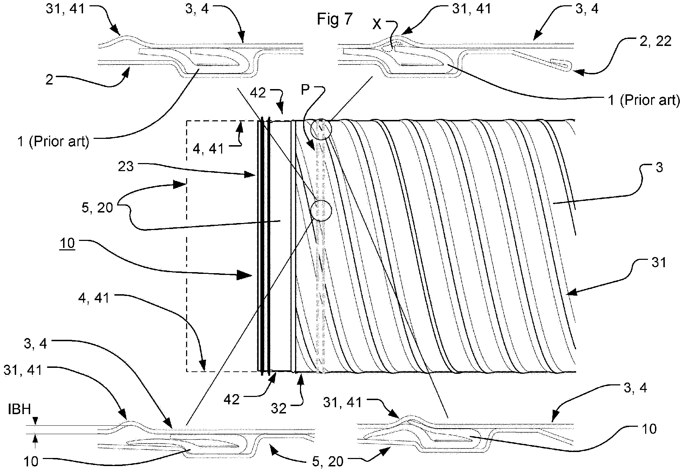

In Figs. 1 to 3, a prior art sealing 1 of a joint between an inner tube connecting element 2 and at least one outer ventilation duct 3 or 4 is shown. The prior art sealing 1 is fastened at an end of the inner tube element 2 working as a duct connector being partially and with a close fit inserted into the end of at least one outer ventilation duct 3 and/or 4. This prior art sealing 1 is also shown in two side views in Fig. 7, i.e. in one view at the topmost left corner in Fig. 7 and in one view at the topmost right corner in Fig. 7. The air-leakage when using the prior art sealing 1 for ventilation ducts 3, 4 with larger diameters and having helically extending reinforcement beads 31, 41 is schematically shown as an area X in the top right view of Fig. 7, which air-leakage through air-leak area X is not eliminated by the prior art sealing 1.

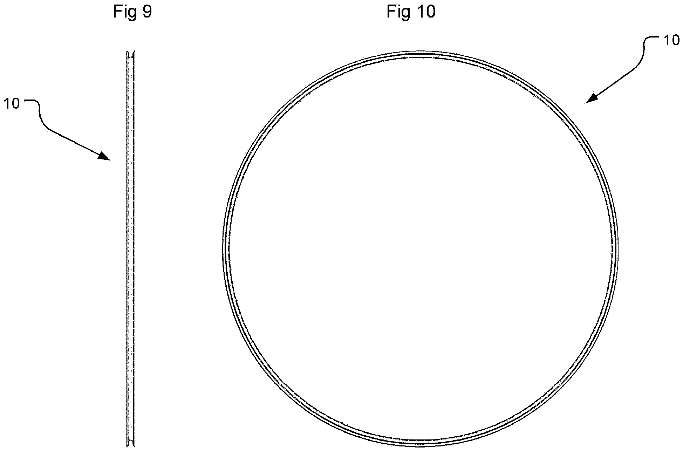

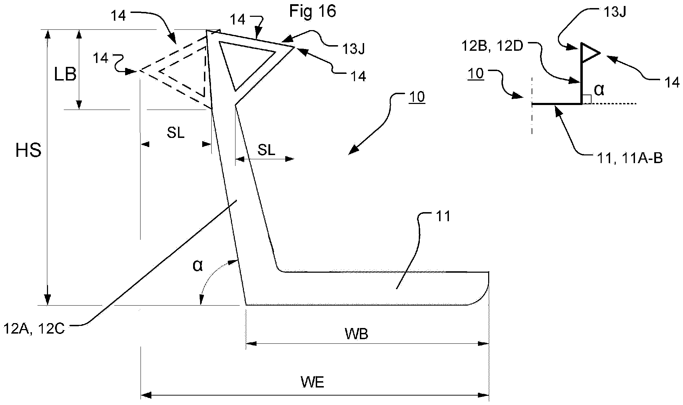

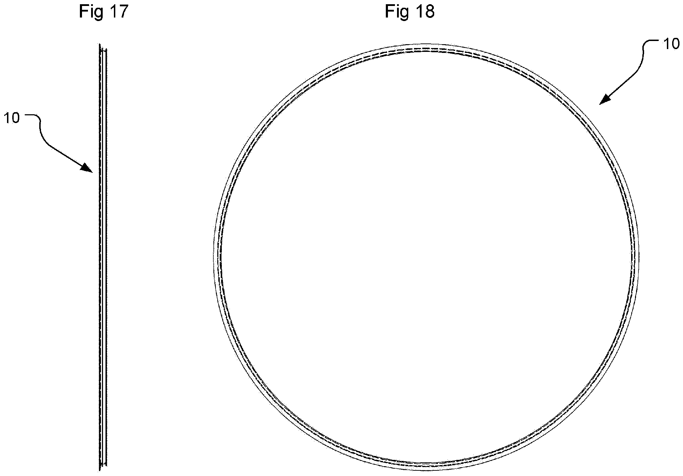

The sealing arrangement 10 shown in Figs. 4 to 26 according to the invention is adapted for air-tight or air-proof seal of joints between an inner tube connector 20 corresponding to the prior art connector 2 above and at least one outer ventilation duct 3 or 4, but may be used for interconnecting two outer ventilation ducts 3 and 4 and subsequently two joints, one joint at each end of the inner tube connector 20.

The sealing arrangement 10 shown in Figs. 4 to 26 according to the invention is also adapted for air-tight or air-proof seal of joints between at least one ventilation duct fitting 5 and at least one outer ventilation duct 3, 4. Each ventilation duct fitting 5 (see Figs. 4 to 7) may be a cap end, a lid, a damper, a diffuser, a measuring unit, a valve, a valve socket, a reducer, a saddle, a bend, a tee or the like used for plugging up an end of a ventilation duct 3, 4; interconnecting two outer ventilation ducts 3 and 4 extending in different directions; reducing sound in ventilation ducts; achieving air-tight seal between duct and a diffuser, a measuring unit, and between a valve and its valve socket or any other fitting. The invention and its application will be explained with reference to the inner tube connector 20 but the same principles of interconnecting each ventilation duct 3, 4 with any other and any number or combination of the above fittings 5 may be applied.

This sealing arrangement 10 according to the invention is also shown in two side views in Fig. 7, i.e. in one view at the bottommost right corner in Fig. 7 and in one view at the bottommost left corner in Fig. 7. In the middle section of Fig. 7, the inner tube connector 20 is shown with one free end, i.e. an end connected to a ventilation duct 4 shown with dash dotted lines, to the left exposing the sealing arrangement 10 at that end, and with one end to the right connected with a slid-on ventilation duct 3 having the sealing 10 shown with grey lines as the sealing arrangement 10 is covered by this duct 3.

The inventive sealing arrangement 10 shown in Figs. 4 to 18 is specifically designed for easy installment and secure and efficient air-tight sealing of joints at ventilation ducts, in particular helically wound lock seam ventilation ducts of sheet metal with a larger tube diameter and having at least one reinforcement bead 31, 41 extending helically along the length of the ventilation ducts forming a channel at area X in Fig 7 that is efficiently sealed off by the inventive sealing arrangement 10.

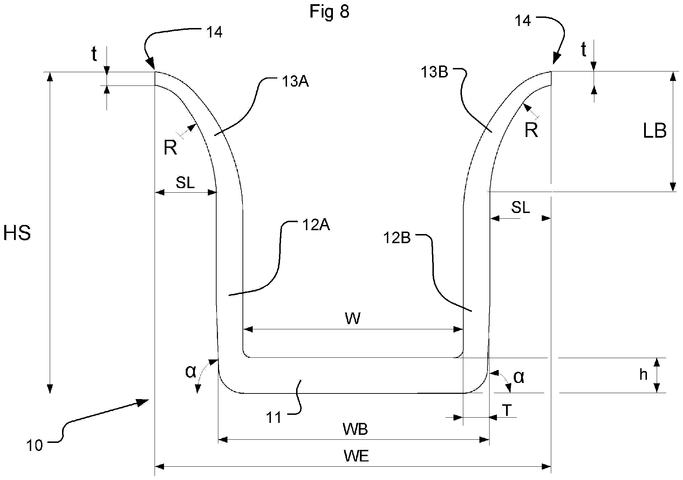

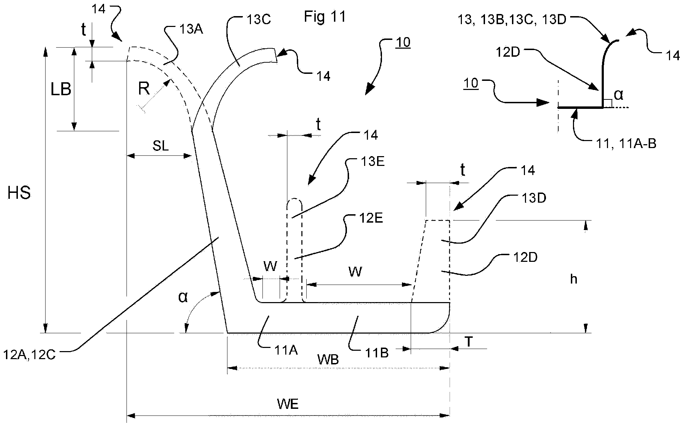

In Figs. 8 and 11 to 16, there is shown an upper right view in smaller scale of a version of the sealing 10 being an inverted version of the left larger view if the sealing 10 has an L-shaped cross-section with only one protruding leg 12C. The upper right views in Figs. 8 and 11 to 16 may be the right-hand member or leg of a sealing 10 having an U-shaped cross-section with two protruding legs 12A and 12B or 12C and 12D of which the larger view corresponds to the left-hand leg 12A or 12C of the U with the base 11, 11A-B interconnecting these two legs of the U. The upper right views in Figs. 8 and 11 to 16 may be the rightmost leg of a sealing 10 having for example an E-shaped cross-section with three protruding legs 12C and 12D and 12E of which the larger view corresponds to the leftmost leg 12C of the E with the base 11A-B interconnecting the three legs of the E similar to Fig. 11.

The reinforcement bead 31, 41 has the function of a support structure for stiffening ventilation ducts 3, 4 with larger diameters as these larger tubes would otherwise be too limpy/flabby/sloppy due to the fact that their tube thickness is small or thin in relation to their tube diameter. This thickness and diameter relationship would without the reinforcement bead 31, 41 make the whole duct "snake-like" by acting as a limpy elongated object, in principle similar to a limpy "sausage", when handled, used and suspended in a ventilation system and the duct would also run the risk of being undesirably deformed and/or bent during use negatively affecting the air-tightness of duct joints after assembly.

The sealing arrangement 10 between the inner tube element 20 and each outer ventilation duct 3 or 4 extends continuously around the external circumference of each end 22 or 23 of the inner tube element 20.

The inner tube element 20 comprises a first end 22 shown to the right in Fig 7. This first end 22 at the right hand of Fig 7 is covered at least partly by the outer ventilation duct 3 being slid over it. The inner tube element comprises a second end 23 to the left in Fig 7. This second inner tube element end 23 is exposed to the left in Fig 7 but may of course also be covered by another outer ventilation duct 4 being slid over it similar to the first end 22 forming a second joint. An end cap 5 only has one end 22, while for example a damper 5 has two ends 22 and 23.

Each outer ventilation duct 3, 4 is a circular tube with at least one reinforcement bead 31, 41. The sealing arrangement 10 comprises at least one protrusion 12, 12A-E. Each protrusion extends from the sealing arrangement for sealing against the inner circumference of at least one outer ventilation duct 3, 4. The sealing protrusion comprises at least one outer portion 13, 13A-J. Each outer portion comprises at least one free end 14.

Each outer sealing portion 13, 13A-E is adapted to physically and continuously contact the inner circumference of each outer ventilation duct 3, 4. This is achieved by continuously contacting an inner helically extending circumference provided by the at least one reinforcement bead 31, 41 at the joint between the first end 22 of the inner tube element 20 and the first outer ventilation duct 3.

Each reinforcement bead 31, 41 extends helically along each outer ventilation duct 3 and/or 4 and forms a helically varying circumference and diameter of each outer ventilation duct 3 or 4. The sealing arrangement 10 achieves a continuous air-tight seal effect of each joint between the fitting 5 and the inner tube element 20 and the helically varying diameter of each outer duct 3 and/or 4. The sealing arrangement 10 achieves the continuous air-tight seal along the inside of the reinforcement bead when interconnected by means of the outer portion and free end 13, 13A-J, 14 of each sealing protrusion 12, 12A-E. The sealing arrangement 10 is pliable by means of each outer portion 13, 13A-J and free end 14 achieving the continuous air-tight seal by being in constant physical contact and intimately following the helically varying diameter of each outer ventilation duct 3 or 4 along the inside of the reinforcement bead at each duct joint in an air-tight conformable way, i.e. without leaving any open air channel X (see Fig 7) between the contacting areas of each outer sealing portion 13, 13A-J and free end 14 and the inner surface of the ventilation duct 3 and/or 4 including the inner surface of the larger duct diameter of each reinforcement bead 31 and/or 41.

Each joint is an annular gap between a circular cylindrical outer surface of the fitting 5 and the inner tube connector 20 and the circular cylindrical inner surface of an outer ventilation duct 3 or 4 as any joint between such interconnected parts inevitably has tolerances making it difficult to have an air-proof joint without any additional type of sealing, as a sealing ring 10.

The invention also relates to a method comprising the steps of extruding a continuous elongated body for forming the sealing arrangement 10 as a strand, bending a length of the sealing strand 10 into a circular annular shape, bringing the ends of the strand length together, and interconnecting the ends forming a sealing ring 10 having a U-shaped cross-section with a base or web 11, 11A-B interconnecting the protruding legs 12, 12A-E with free ends 14 of the U-shape.

Hence, from the sealing web 11, 11A-B, each protrusion 12, 12A-E extends into at least one free part, member or projection13, 13A-J with at least one free end 14 that may be straight but at least deviates partly from the plane of each protrusion. Protrusion 12, 12A-E may comprise at least one outer portion 13, 13A-J at its end deviating from the shape or protruding direction of the protrusion 12, 12A-E. Each free end 14 may have a shape with an outermost part or edge arranged at a distance SL from the protrusion 12, 12A-E in the lateral direction of the sealing arrangement 10. This means that the free end 14 may extend freely in a direction and with a distance SL deviating at least partly from the extension plane of protrusion 12, 12A-E. The end 14 may extend freely in a direction substantially perpendicular or close to perpendicular to the extension plane of protrusion 12, 12A-E. The end 14 may extend freely a distance SL as measured from protrusion 12, 12A-E being at least equally long as the inner depth or inner height IBH of the reinforcement bead 31, 41 (see bottom most left view in Fig 7). The free end portion 13, 13A-J may also form the end of protrusion 12, 12A-E itself. The distance SL is measured along a plane or direction being substantially or close to substantially in parallel or in parallel with the plane of the base 11, 11A, 11B, i.e. distance SL is measured in the lateral direction of protrusion 12, 12A-E. Distance SL may also be equal to the length LB below.

The size of the inner depth or inner height (IBH) of the reinforcement bead 31, 41 shown in the bottom most left view in Fig 7 depends on the thickness of the material that the ventilation ducts 3 and 4 are made of, e.g. 1.25 mm thick metal, and the diameter of the associated ventilation ducts 3 and 4. Hence, the size of each outer portion 13, 13A-J and its free end 14 is adapted to the IBH of the reinforcement bead 31, 41, the diameter of the fitting 5 and the inner connector 20, the diameter of the ventilation duct 3 and/or 4 and of course the tolerances of the annular gap between these parts, for achieving a secure air-tight seal between these associated parts.

The outer ventilation duct 3, 4 is axially slidable onto an end 22 of the inner tube connector 20 and the fitting 5, whereby the sealing 10 is adapted to be located in and attached/fastened to the outer circumference of the inner tube connector 20 and fitting 5. The sealing 10 may be attached to a circumferential groove 21 in the inner tube connector 20 and fitting 5. The fastening of the sealing 10 is done prior to the sliding-on of each outer ventilation duct 3 or 4. The fastening of the sealing 10 may be realized by making the sealing an integrated part of the connector 20 and fitting 5. The outer ventilation duct 3, 4 could be equipped with the groove 21 instead of the inner tube connector 20 and fitting 5. The sealing 10 comprises a first sealing portion, i.e. the base 11, 11A-B, which is adapted to abut, i.e. bottom with its underside against the outer circumference of the fitting 5 and the connector 20 or the bottom of the groove 21 formed in one of the ducts, e.g. the duct connector 20.

The protrusions 12, 12A-E form a second sealing portion in the sealing 10 extending into a third primary sealing portion, i.e. the free sealing ends being either formed by the outer portions 13, 13A-J themselves or of the outmost free ends 14 or formed by a combination of these parts. The free ends 14 may be the bent-out or bent-in portions 13, 13A-J. The protrusions 12, 12A-E and free ends 14 and outer portions 13, 13A-J are adapted to commonly seal by physical, constant, and continuous contact with/against the inner circumference of the other pipe, i.e. the outer ventilation duct 3, 4, during and after assembly/interconnection enabling an air-tight joint.

Each protrusion 12, 12A-E extends from the sealing base 11, 11A-B for sealing against the inner circumference of each outer ventilation duct 3, 4 in a radial plane P (see Fig 7) substantially perpendicular or perpendicular to the longitudinal direction of the ventilation duct before assembly of the ducts.

The outer portions 13, 13A-J and/or their free ends 14 may be deflected by being curved, folded, bended and/or joggled from or towards each other as shown in Figs. 4 to 26. These outer portions 13A, 13B, 13C, 13D, 13E, 13F and their free ends 14 may be shaped as folded, inclined, bent-out or bent-in portions arranged at at least one protrusion or each protrusion 12, 12A-E (see Figs. 4 to 7, 8, 11, 12, and 19 to 22).

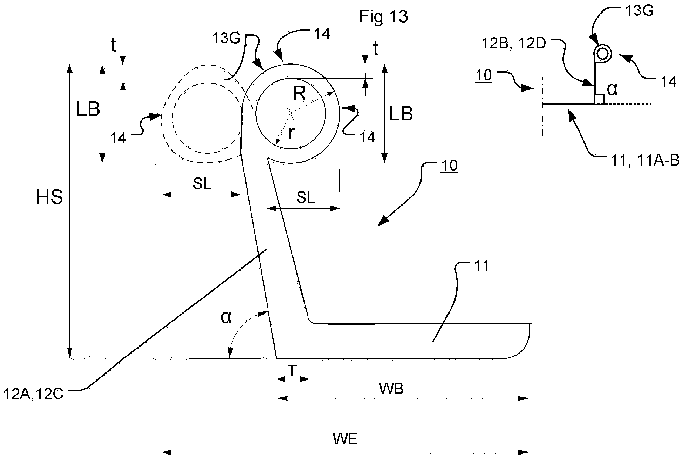

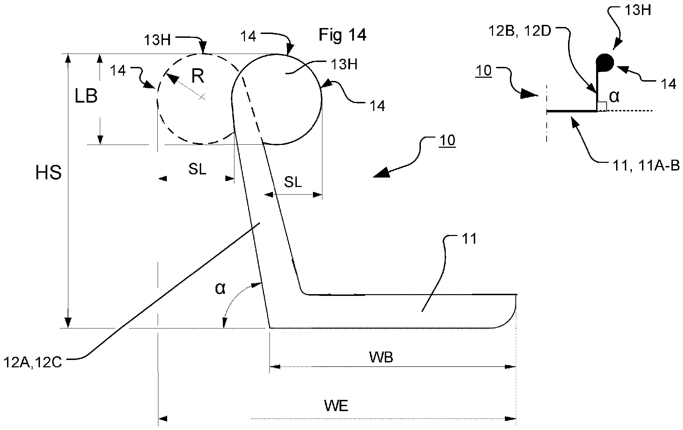

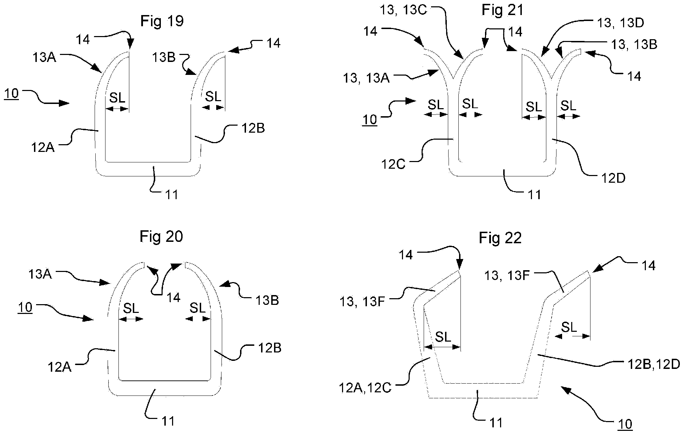

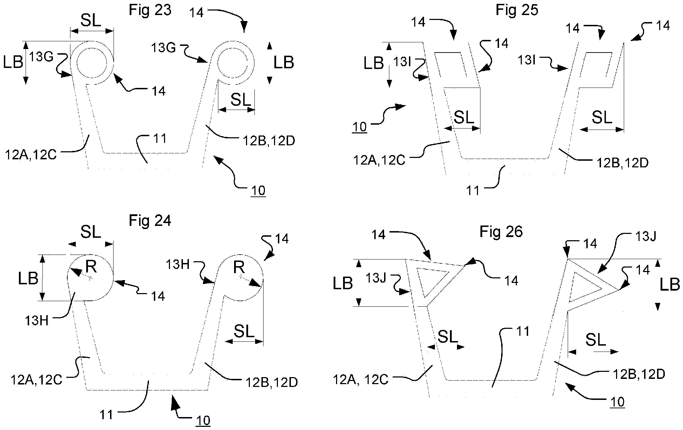

The outer portions 13G, 13H and/or their free ends 14 may be shaped as shown in Figs. 13 to 14 and 23 to 24 with a hollow or solid round shaped cross-section similar to a circular bead and/or bulge arranged at the end of the substantially straight, straight or somewhat angled protrusions 12, 12A-E or the bead and/or bulge may form the free ends 14 arranged at the end of the outer portion 13G, 13H. These exemplifying shapes may have an outer radii R (solid and hollow ones) and inner radii r (only the hollow shapes) that are relatively large or small forming points, lines or areas of contact surfaces that achieve a more distinct and secure contact with the outer ventilation duct 3, 4 and its reinforcement bead 31, 41 creating an improved sealing when pressed against the outer ducts. These outer portions 13g, 13H may also be oriented to face in the same direction as in Figs. 23 and 24 or face towards different directions or extend in opposite directions inwards or outwards of the sealing 10 as in Figs. 13 and 14, similar to the bent-in or bent-out versions in Figs. 19 to 21.

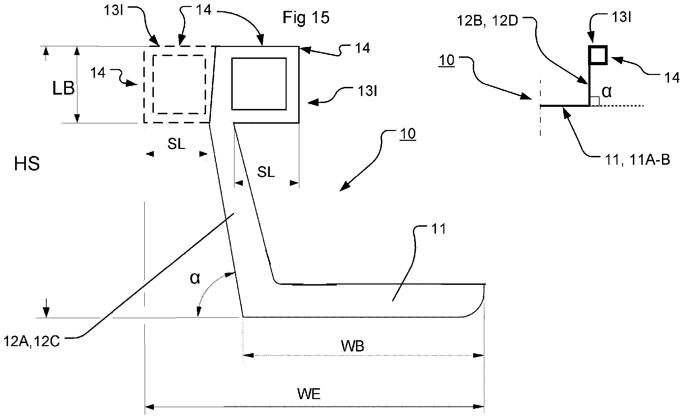

The outer portions 13, 13A-J and/or their free ends 14 may be shaped as shown in Figs. 15 to 16 and 25 to 26 with a hollow or solid polygonal shaped cross-section similar to a quadratic or rectangular or triangular bead and/or bulge arranged at the end of the substantially straight, straight, or somewhat angled protrusions 12, 12A-E or the bead and/or bulge may form the free ends 14 themselves arranged at the end of the outer portion 131, 13J. These exemplifying shapes may have relatively sharp corners forming points 14 that achieve a more distinct and secure contact with the outer ventilation duct 3, 4 and its reinforcement bead 31, 41 creating an improved sealing. These outer portions 131 and 13J may also be oriented to face in the same direction as in Figs. 23 and 24 or face towards or from each other in different directions, i.e. extend in opposite directions inwards or outwards of the sealing 10 as in Figs. 13 and 14, similar to the bent-in or bent-out versions in Figs. 19 to 21 and Figs 25 and 26.

The continuous air-tight contact is achieved by the protrusion 12, 12A-E and its free portions and ends 13, 13A-J, 14 being pliable and able to flex. This flexibility is required due to the fact that the reinforcement bead 31, 41 forms the helically extending hollow channel X passing past and beyond the width of the sealing 10 at the joint, which channel X is sealed air-tight by the inventive sealing 10 as shown in Fig 6 compared to the prior art sealing of Fig 3. This is done by each outer portion 13, 13A-J being in constant physical contact and intimately following, by flexing, the helically varying diameter of each one outer ventilation duct at the bead 31, 41. This enable the free ends 14 of the outer portions 13, 13A-J to be air-tight kept/held against the inner surface of the beads 31, 41 without flexing out of physical contact with this inner surface of the beads and the ventilation duct 3, 4 itself. The prior art sealing of Figs. 1 to 3 and 7 is not able to have its free ends contacting and intimately following the inner surface contours of each outer ventilation ducts 3 and 4 and the reinforcement beads 31, 41 by means of the flexing ability and the sealing shape and size and length as in the present invention. Hence, each deflected, inclined, folded portion, rounded, polygonal and/or bent-out or bent-in portion 13, 13A-J and their free ends 14 is adapted to physically and continuously contact the inner circumference of each outer ventilation duct 3, 4 by flexing and/or bending, i.e. by being pliable enabling each in singular or in a combination of a number of these parts 13, 13A-J, 14, at least two or more than two, to intimately and in constant sealing contact follow the inner circumference of each outer ventilation duct and each reinforcement bead.

This inventive sealing effect is also enhanced in that the outer portions 13, 13A-J and their free ends 14 are pressed against the inner circumference of the outer duct 3, 4 and deformed, i.e. shape-changed in an adaptable and ductile way during connection and after connection of the coupled ventilation parts 3, 4, 5, 20.

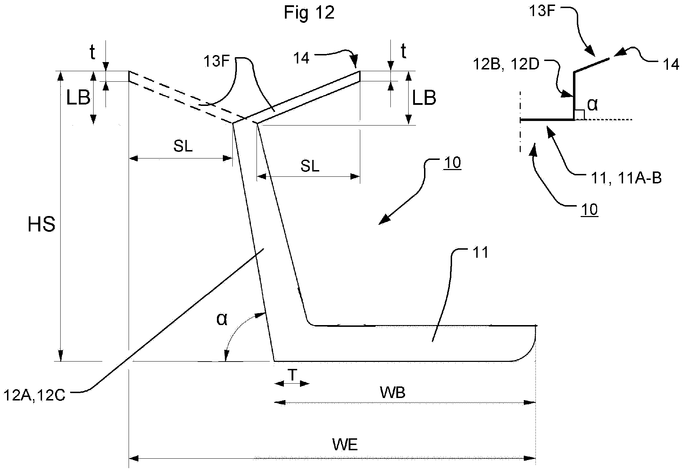

The sealing 10 could use a combination of differently shaped outer portions 13, 13A-J and free ends 14, e.g. at least one bent-in or bent-out portion 13, 13A, 13B, 13C (from Figs. 8, 11 and 19 to 21) and at least one straight portion 13D or at least two straight portions 13D and 13E (from Fig. 11). Another combination could be at least one folded portion 13F (from Figs. 12 and 22) and at least one straight portion 13D or at least two straight portions 13D and 13E (from Fig 11). Yet another combination could be at least one folded portion 13F (from Figs. 12 and 22) and at least one straight portion 13D or at least two straight portions 13D and 13E (from Fig 11) and at least one bent-in or bent-out portion 13, 13A, 13B, 13C (from Figs. 8, 11 and 19 to 21). A further combination could be at least one bent-in or bent-out portion 13, 13A, 13B, 13C (from Figs. 8, 11 and 19 to 21) and at least one rounded portion 13G or 13H or at least two rounded portions 13G and 13H (from Figs. 13 to 14 and 23 to 24). Each of the above combinations could be complemented with at least one hollow or solid polygonal shaped cross-section 131 and/or 13J (from Figs. 15 to 16 and Figs. 25 to 26). To sum up, each of the above combinations could be combined singularly or in pairs or in any other number of combinations, e.g. combinations of one or more bent portions 13A-D and/or one or more rounded portions 13G-H and/or one or more polygonal portions 13I-J and/or one or more inclined portions 13F are possible besides the shown ones.

The sealing 10 is foldable by being bent downwards towards the fitting 5 and inner tube connector 20 when each outer ventilation duct 3, 4 is slid onto it as shown in Figs. 4 to 7. Hence, the sealing 10, i.e. its protrusions 12, 12A-E and free ends 14 at the outer portions 13, 13A-J may be folded, e.g. at least 30° or closer to 45° or about 60° to 90°, preferably 80° to 90°. Hence, the protrusions 12, 12A-E with their ends 14 may be folded between one position in which the protrusions extend in a substantially perpendicular direction or radially in relation to the longitudinal direction of the fitting 5 and connector 20 and another position in which the protrusions extend in a direction being angled in relation to the longitudinal direction of the fitting 5 or connector 20 or substantially in parallel with the longitudinal direction of the duct. The folding or bending of the sealing protrusions 12, 12A-E occurs of course to the left if a first ventilation duct 3 is slid onto the fitting 5 and connector 20 from the right as shown in Figs. 4 to 7 and occurs of course to the right if a second ventilation duct 4 is slid onto the fitting 5 and connector 20 from the left (not shown).

The sealing ring 10 may be made of at least one elastic/ductile material, e.g. a polymer, an EPDM or Nitrile rubber or the like, with a cross-section shape similar to an U in Figs 4 to 10 and 19 to 26, and a L or F or E in Figs. 11 to 18 when viewed from the end, i.e. when viewed in a direction along or in parallel with the length of the not yet circularly formed strip or strand or when viewed in a direction perpendicular to the length of the ventilation ducts 3, 4. The protrusions 12, 12A-E form the legs of the U, the L, the F, and the E. Each protrusion 12, 12A-E extends in a plane, which plane may have a normal vector substantially parallel or angled in relation to the longitudinal direction of the ducts 3, 4 when the sealing is fastened on the fitting 5 and connector 20. The protruding legs 12, 12A-E may extend in a substantially radial direction in relation to the longitudinal direction of the ducts or in a direction not being substantially perpendicular to the lengthwise direction of the duct 3, 4, but somewhat angled/inclined in relation therewith (see angle α in Figs 11 to 18 being perpendicular or substantially perpendicular to the plane of the sealing web 11, 11A-B or angled between 10° to 89° from the sealing web plane 11, 11A, 11B or angled between about 10° to 90° or more as measured from the longitudinal direction of the ducts 3, 4, the fitting 5 and the connector 20.

The sealing 10 comprises contact surfaces formed by at least parts of but also the whole of the protrusions 12, 12A-E and the outer portions 13, 13A-J and their free ends 14 of which at least one part of one of these contact surfaces slides in constant physical contact without interruption against the inner surfaces and contours of the ventilation ducts 3 and 4 and their reinforcement beads 31, 41 and/or any other protrusion/outer portion when the ducts are connected by sliding onto and over and past each sealing 10. This constant contact is achieved at each end of the inner tube connecting element 20. Hence, this uninterrupted physical contact between at least one part of the sealing 10 and the inner surface of the ventilation ducts 3 and 4 including their reinforcement beads 31 and 41 effects the efficient and secure sealing effect of each duct joint according to the invention. This is also due to the fact that each outer portion 13, 13A-J with its free ends 14 reaches further out due to its shape and length, whereby there is a guaranteed and secure constant/continuous contact between the sealing 10 and the inner surfaces of the ventilation ducts 3, 4 including their reinforcement beads 31, 41. This improved ability of reaching out and getting into and upholding sealing contact with the inner surfaces of the ventilation ducts 3, 4 including their reinforcement beads 31, 41 is guaranteed by the deflection of outer portions 13, 13A-J and number of protrusions and outer portions, e.g. one protrusion with one outer portions seals efficiently, but a protrusion with two outer portions seals more efficiently. The same goes if two protrusions are used having one outer portion each while two protrusions of which each have at least two outer portions seals even better. This improved ability of reaching out and getting into and upholding sealing contact with the inner surfaces of the ventilation ducts including their reinforcement beads is guaranteed by the deflection of the free ends 14. This improved ability of reaching out and getting into and upholding sealing contact with the inner surfaces of the ventilation ducts including their reinforcement beads is guaranteed by the shape of the free ends 14. This improved ability of reaching out and getting into and upholding sealing contact with the inner surfaces of the ventilation ducts 3, 4 including their reinforcement beads 31, 41 is guaranteed by the size of the free ends 14. The same goes if two protrusions are used having one outer portion which in turn has two free ends while two protrusions of which each have at least two outer portions with two free ends seal even better. This improved ability of reaching out and getting into and upholding sealing contact with the inner surfaces of the ventilations ducts 3, 4 including their reinforcement beads 31, 41 is guaranteed by the bent-out or bent-in outer portions 13, 13A-J. The effect of the above is that the sealing 10 keeps and enhances the sealing by securing the constant "touching" between the sealing and the surfaces of the ducts 3, 4 for upholding the sealing-off of each joint in an air-tight way. These exemplifying shapes of the outer portions 13, 13A-J all have a shape and size and thickness that form points, lines or areas of contact surfaces that achieve an adaptable and a more distinct and secure contact with the outer ventilation duct 3, 4 and its reinforcement bead 31, 41 creating an improved sealing when pressed against the inside of the outer ducts. This sealing effect is also improved by applying more than one protrusion which in turn may have more than one outer portion of which each outer portion may have more than one free end as the double folding gets tighter and each protrusion, outer portion and free end cooperates with the other associated sealing parts further enhancing the sealing and increasing the sealing area and sealing parts/surfaces.

Each outer portion 13, 13A-J of the sealing 10 extends a distance HS from the outer circumference of the fitting 5, 20 and deviate at least partly the distance SL from the extension plane of the protrusions 12, 12A-E. Each outer portion 13, 13A-J of the sealing 10 may be bent in a curve being a portion of a semicircle or substantially a whole circle or a full circle with a radius R that may be adapted for different dimensions of ducts 3, 4 and reinforcement beads 31, 41. Fig 8 shows outer portions 13A and 13B being bent-out from each other and the sealing 10. Fig 11 shows outer portions 13A and 13C on protrusion 12C, one portion 13A shown in dashed lines bent-out to the left from another portion 13C being bent-in to the right and towards the sealing 10. Protrusions 12D-E and outer portions 13D-E are shown straight and in dashed lines as other possible shapes and types of sealing 10. Distance HS is large enough for one protrusion to be bent into sealing contact with any other protrusion if more than one protrusion is used.

Each protrusion 12, 12A-E may have a varying thickness T, t such that the protrusions are pliable, e.g. by being bendable in a sufficiently flexible way. This varying thickness achieves a controllable and diameter compensating and faulty correcting function enhancing the sealing effect as at least parts of but also the whole of the protrusions 13, 13A-J and their ends 14 may form contact surfaces of which at least one part of one of these contact surfaces efficiently and securely slides in constant physical contact without interruption against the inner surfaces and contours of the ventilation ducts 3 and 4 and their reinforcement beads 31, 41 when the ducts are connected by sliding onto and over and past each sealing 10 at each end 22, 23 of the inner tube connecting element 20. This uninterrupted physical contact by the varying thickness of the protrusions 12, 12A-E and their ends 13, 13A-J, 14 between at least one part of the sealing 10 and the inner surface of the ventilation ducts 3 and 4 including their reinforcement beads 31 and 41 enhances the efficient and secure sealing effect of each joint according to the invention.

The sealing 10 shown in Figs. 11 to 26 comprises the left protrusion 12C and the outer portion 13A or 13C while the other protrusions 12D and 12E are extending in a substantially straight direction, even though the rightmost protrusion 12D as an example has an inclined surface facing inwards of the sealing towards the other two protrusions. The rightmost protrusion 12D may extend with an angle α not being 90°. Each protrusion 12C, 12D and 12E comprises free ends 13C, 13D, 13E, 14. Each protrusion 12C, 12D and 12E may form legs of the L-, F- or E-shaped cross-section. Protrusion 12C may extend in a direction not being aligned or in parallel with each of the other protrusions 12D, 12E by extending in an angle α larger or less than 90º from the longitudinal direction of the ducts 3, 4 and the base 11, 11A, 11B of the sealing 10. At least one or all of the protrusions 12, 12A-E may extend with an angle α being 90º or deviating from 90º. Leftmost protrusion 12C may extend with an angle α being about 90°or extend in parallel with the other protrusions 12d and 12E. If the sealing 10 comprises three protrusions 12C, 12D, and 12E as in Fig. 11, the base 11 of the sealing 10 is made up of one/first web length 11A between the left outmost protrusion 12C and the middle protrusion 12E and another/second web length 11B to the right between the right outmost protrusion 12D and the middle protrusion 12E.

The sealing 10 comprising protrusions 12, 12A-E with outer portions 13, 13A-J and free ends 14 may have each end 14 similar to a lip over which each ventilation duct 3, 4 is slid with a close fit so that each lip is pressed and bent into sealing contact with the outer duct 3, 4 and the inner tube connector 20. The sealing 10 may have only one lip 14 if only one protrusion is present. Each free end 14 may be split into two lips as shown in Fig 21, similar to a snake's tongue. This shape gives an even better sealing effect as at least two free ends 14 on one protrusion 12, 12A-E with at least one outer portion 13, 13A-D cooperate and contact the outer ducts with a larger surface. Alternatively, at least four free ends 14 are applied due to use of at least two protrusions 12, 12A-E, each protrusion having at least one outer portion 13, 13A-D for improving the sealing effect further by means of a further increased contact surface. The sealing 10 may have each lip 14 pressed and bent into sealing contact with the outer duct 3, 4 and the fitting 5 and/or the inner tube connector 20 and into sealing contact with another lip if more than two lips 14 are used or the outer duct 3, 4 and its beads 31, 41 are pressed into contact with more than one lip if at least two protrusions are used of which each protrusion may have at least one lip 14. The outer duct 3, 4 and its beads 31, 41 may be pressed into contact with at least one lip (or two lips if more than two protrusions are used) as not all protrusions but one must be sufficiently long to achieve the sealing effect, it suffices that only one protrusion has a deflection, bent-out or bent-in portion or rounded or polygonal shape or sufficient large size or is long enough for achieving the inventive sealing effect between the fitting 5, 20 and the inside of the ventilation ducts 3, 4 and their reinforcement beads 31, 41 by being able to maintain sealing contact against the outer ventilation parts 3, 4, 5, 20. Each protrusion 12, 12A-E having at least one outer portion 13, 13A-D may maintain sealing contact against any other protrusion 12, 12A-E and/or any other outer portion 13, 13A-D and each ventilation part 3, 4, 5, 20 if more than one protrusion/outer portion is used (see Figs 4 to 6).

Each protrusion 12,12A-E is folded double, at least along a part of its free length, e.g. at least along the outer portion 13, 13A-J and/or at least along the free end 14 by being bent downwards (Figs. 6 and 7) achieving the above explained sealing contact, such that the double fold shape gives an air-tight sealing effect when the ventilation ducts 3, 4 have been introduced sufficiently far over each end 22 of the fitting 5/inner tube connecting element 20. The middle protrusion 12E has a middle free end 13E, 14 that may be bent (not shown) in the similar way as the other portions and free ends 13A-D, 14 or be straight as shown in Fig. 11. The middle protrusion 12E may be bent (not shown) in the similar way as the other protrusions 12A-D when the ventilation ducts 3, 4 are slid-on the connector 20 or be kept straight if the protruding length is shorter than the other protrusions such that the ventilation duct 3, 4 is not able to contact and thereby not able to press the middle protrusion 12E downwards by bending it towards the connector 20 as shown in Fig. 11.

Furthermore, the preferred thickness T, t of the sealing 10 and its protrusions 12A-E and outer portions 13, 13A-J, 14 also optimizes the flexibility and rigidity of the parts of the sealing 10 that carry the air-proof seal into effect without making the sealing 10 and its associated parts too "limpy". The free end 14 may have another thickness, preferably smaller, than the remaining outer portion 13, 13A-J and/or the protrusion 12, 12A-E.

Legs 12A and 12C are shown as the left ones in the Figs. 8, 11 and 21 to 26 and the legs 12B and 12D are shown as the right ones in the same Figs, but this order depends on from which direction the sealing 10 is viewed. Moreover, these legs 12A-E, e.g. 12A, 12B, 12C and 12D may be angled with angle α to the left or to the right in these figures depending on the application of the sealing 10. Furthermore, the outer portions 13, 13A-J, 14 may be bent to the left in Figs. 8 to 20 or to the right in these figures depending on from which direction each ventilation duct 3 or 4 is introduced onto and slid over the sealing 10.

Fig. 11 shows the leg or lip 12C with outer portions 13A and 13C, shown in continuous and dotted lines, deflected or bent to the left or the right depending on if the sealing 10 has the right short leg 12D closest to an end 22, 23 of the connector 20 or if the longer left leg 12C is placed closest to an connector end when attached to the connector. If the short leg 12D is closest to a connector end, the outer portion 13C, 14 of the longer leg 12C is deflected or bent to the right, i.e. the bent portion 13C of the long leg 12C is deflected or bent towards the short leg 12D. If the long leg 12C is closest to the connector end, the outer portion 13A, 14 of the longer leg 12C is deflected or bent to the left of Fig. 11, i.e. the outer portion 13A of the longer leg 12C is deflected or bent away from the short leg 12D.

In Figs. 8 and 11 to 16, a width WB of the base 11, 11A, 11B of the sealing 10 as measured in the plane of the underside/bottom of the sealing base is about 10-50% less than the width WE of the sealing 10 as measured at the level of the outer portion 13, 13A-J, 14 above the base but measured in a plane in parallel with the sealing base. The height HS of the sealing 10 as measured vertically from the underside/bottom of the sealing base 11, 11A, 11B or radially from the ducts 3, 4 to the upper end of the free ends 13, 13A-J, 14 is about 10-40% larger than the width WB of the sealing as measured in and from the plane of the underside/bottom of the sealing base 11, 11A, 11B to the outmost corners/edges 14 of the sealing laterally, i.e. a longitudinal direction of the ducts 3, 4. A height h of each protrusion 12, 12A-E is measured in the same way as HS and h is adapted to the application of each sealing 10. The length LB (vertically in Figs 8 and 11 to 16) of each outer portion 13, 13A-J amounts to at least 30 to 60% of the height HS. The length or height LB may be equal to the height of a symmetrically shaped outer portion 13, 13A-J or the radius R or r or the diameter if the shape of the outer portion 13, 13A-J is rounded or circular.

The sealing 10 may have the thickness T, t of each protrusion 12, 12A-E decreasing from the base 11, 11A, 11B towards the end 14 of each outer portion 13, 13A-J for better flexibility and adaptability to the varying diameters of the duct 3, 4 and the beads 31, 41 (see Figs. 8 to 13). One example of the thickness of each protrusion 12, 12A-E decreases from T being between 1 and 5 mm at the base 11, 11A, 11B to t being between 0.5 and 3 mm at the end 14. The thickness T, t may be equally large along the whole protrusions 12, 12A-E. The height h may be equal to thickness T, t in the sealing 10. In Figs 14 to 26, no numerals T, t are shown but thicknesses are of course present in these sealing arrangements 10 and may be varied in the same way as the thicknesses in the sealing arrangements of Figs 4 to 13.

The sealing 10 may also be made of two different elastic materials to achieve the same function, depending on application, e.g. its outer portions and/or free ends 13, 13A-J, 14 may be made of one elastic material and the protrusions 12, 12A-E may be made of another elastic material, the same goes for the sealing base 11, 11A-B.

In Figs. 8, 11, 13 and 14, each end 14 and/or outer portion 13, 13A-J may have radius R, r of curvature of between approximately 5 mm to approximately 20 mm depending on the size of the ventilation ducts 3, 4 and the fitting 5 and inner tube element 20.

A first aspect of the invention concerns a sealing arrangement 10 for a joint between at least one ventilation duct fitting 5, 20 and at least one outer ventilation duct 3, 4, each outer ventilation duct comprising at least one helically extending reinforcement bead 31, 41, wherein the sealing arrangement extends continuously around the external circumference of at least one end 22, 23 of the ventilation duct fitting and comprises at least one protrusion 12, 12A-E extending outwards from the external circumference of the ventilation duct fitting for sealing against the inner circumference of the outer ventilation duct, the sealing arrangement further comprising at least one outer portion 13, 13A-J, 14 at the protrusion, wherein the outer portion is adapted to physically and continuously contact the inner circumference of the ventilation duct and an inner circumference of the reinforcement bead at the joint, which reinforcement bead forms a helically varying diameter of the outer ventilation duct, whereby the sealing arrangement 10 achieves an air-tight seal of the joint between the ventilation duct fitting, the inner circumference of the outer ventilation duct and the helically varying inner duct circumference of the reinforcement bead by means of the protrusion 12, 12A-E and its outer portion 13, 13A-J, 14 extending in different directions to be able to reach and be in constant physical contact and intimately following the inner circumference of the ventilation duct including its helically varying inner circumference on the inside of the reinforcement bead when the ventilation duct fitting and the outer ventilation duct are interconnected.

Hence, the transition between each protrusion 12, 12A-E and its outer portion 13, 13A-J, 14 may be smooth by being smoothly bent as shown in Figs 4 to 6, 8, 11, 13, 14, 19 to 21, 23, and 24. The transition between each protrusion 12, 12A-E and its outer portion 13, 13A-J, 14 may be more distinct by being angled and/or more sharply and/or distinctly curved as shown by Figs 12, 15, 16, 22, 25, and 26. The transition between each protrusion 12, 12A-E and its outer portion 13, 13A-J, 14 may be more pointy with at least one corner area and/or be more or less sharp or curved as shown by Figs 12, 15, 16, 22, 25, and 26. Each outer portion 13, 13A-J, 14 may comprise at least one tip or point and/or sharp corner area as shown by Figs 12, 15, 16, 22, 25, and 26. The protrusion and its outer portion of the sealing 10 is adapted and shaped such that they extend and/or face in different planes and/or directions to reach and be in constant physical contact and intimately following the inner circumference of the ventilation duct including its helically varying inner circumference on the inside of the reinforcement bead when the ventilation duct fitting and the outer ventilation duct are interconnected. Hence, this enables for the protrusion 12, 12A-E and its outer portion 13, 13A-J, 14 to complement each other when pressed down by the outer ventilation duct at interconnection by being able to reach more far away areas and surfaces and also to be able to seal against larger inner surfaces of the duct 3, 4 and the spirally wound reinforcement bead 31, 41 and larger outer surfaces of the inner tube element 2 and/or the ventilation fitting 5 compared to prior art sealings.

A second aspect of the invention concerns a sealing arrangement 10 according to the first aspect, wherein each outer portion 13, 13A-J has at least one free end 14 arranged at a distance SL from the protrusion 12, 12A-E, which distance SL, measured along a plane being substantially in parallel with the longitudinal direction of the ventilation duct fitting 5, 20, is at least equal to an inner height IBH of the helically varying reinforcement bead 31, 41. A third aspect of the invention concerns a sealing arrangement 10 according to the second aspect, wherein the distance SL from the at least one protrusion 12, 12A-E is larger than the inner height IBH of the helical reinforcement bead 31, 41. A fourth aspect of the invention concerns a sealing arrangement 10 according to any preceding aspect, wherein the sealing arrangement comprises at least two protrusions 12, 12A-E. A fifth aspect of the invention concerns a sealing arrangement 10 according to any preceding aspect, wherein the sealing arrangement comprises at least two outer portions 13, 13A-J, 14. A sixth aspect of the invention concerns a sealing arrangement 10 according to the fifth aspect, wherein the sealing arrangement 10 comprises at least two free ends 14. A seventh aspect of the invention concerns a sealing arrangement 10 according to any preceding aspect, wherein the outer portion 13, 13A-J extends in a direction deviating from the extension plane of the associated protrusion 12, 12A-E. An eighth aspect of the invention concerns a sealing arrangement 10 according to any preceding aspect, wherein at least one outer portion 13, 13A-J, 14 is arranged at each end of each protrusion 12, 12A-E. A ninth aspect of the invention concerns a sealing arrangement 10 according to any of the fifth to eighth aspects when the seventh and the eighth aspects are dependent on the fourth aspect, wherein a first outer portion 13, 13A-J at the end of a first protrusion 12A, 12C extends in another direction in relation to a second outer portion 13B-J, 14 arranged at the end of a second protrusion 12B, 12D. A tenth aspect of the invention concerns a sealing arrangement 10 according to any of the fourth to ninth aspects, wherein the outer portions 13, 13A-J, 14 at the ends of the protrusions 12, 12A-E extend in opposite directions in relation to each other. An eleventh aspect of the invention concerns a sealing arrangement 10 according to any of the fourth to tenth aspects, wherein the outer portions 13, 13A-J, 14 at the ends of the protrusions 12A-E have inverted shapes in relation to each other.
- 1: prior art sealing ring
- 2: inner tube element for interconnection of ventilation ducts
- 3: first outer ventilation duct
- 4: second outer ventilation duct
- 5: ventilation fitting, e.g. end caps, dampers, reducers, tees
- 10: sealing arrangement at joints for ventilation ducts
- 11: base/web of sealing
- 11A: first/left base/web part of sealing
- 11B: second/right base/web part of sealing
- 12: leg/projection/protrusion of sealing
- 12A-E: legs/projections/protrusions of sealing
- 13: outer portion of leg/projection/protrusion 12
- 13A-J: outer portions of legs/projections 12A-E
- 14: free end of outer portion 13, 13A-J
- 20: nipple/inner tube element/connector/nipple/lid/coupling
- 21: groove/channel for fastening sealing
- 22: first end of inner tube element/connector
- 23: second end of inner tube element/connector
- 31: reinforcement/stiffening bead/elevation/bump on first outer duct
- 32: end of first outer ventilation duct
- 41: reinforcement bead on second outer ventilation duct
- 42: end of second outer ventilation duct
- α: angle between an protrusion and the base plane
- R, r: radius of curvature of rounded/bent-out portion 13A-D, 13G, 13H
- h: height of each protrusion 12
- HS: total height of sealing 10
- IBH: inner height/depth of stiffening bead 31, 41
- LB: radial/vertical length of each outer portion 13, 13A-J
- SL: outer portion length protruding from side of leg 12, 12A-E laterally
- WE: total sealing width as measured at the outer portion 13, 13A-J in a plane in parallel with the sealing base 11, 11A, 11B
- WB: width of sealing base 11, 11A, 11B as measured in and in parallel with the plane of the underside/bottom of the sealing base

## Claims

1. An arrangement comprising at least one outer ventilation duct (3, 4), at least one ventilation duct fitting (5, 20) and at least one sealing (10) for sealing a joint between the at least one ventilation duct fitting and the at least one outer ventilation duct, each outer ventilation duct comprises at least one helically extending reinforcement bead (31, 41), and the sealing (10) extends continuously around the external circumference of at least one end (22, 23) of the ventilation duct fitting, **characterized in that** the sealing (10) comprises at least one protrusion (12, 12A-E), which extends outwards from the external circumference of the ventilation duct fitting (5, 20) for sealing against the inner circumference of the outer ventilation duct (3, 4), and at least one outer portion (13, 13A-J, 14) at the protrusion, wherein the protrusion and its outer portion are adapted to physically and continuously contact the inner circumference of the ventilation duct and an inner circumference of the reinforcement bead at the joint, which reinforcement bead (31, 41) forms a helically varying diameter of the outer ventilation duct, whereby the sealing (10) is configured to achieve an air-tight seal of the joint between the ventilation duct fitting, the inner circumference of the outer ventilation duct and the helically varying inner duct circumference of the reinforcement bead by means of the protrusion (12, 12A-E) and its outer portion (13, 13A-J, 14) extending in different directions, wherein each outer portion (13, 13A-J) has at least one free end (14) arranged at a distance (SL) from the protrusion (12, 12A-E), which distance (SL), measured along a plane being substantially in parallel with the longitudinal direction of the ventilation duct fitting (5, 20), is at least equal to an inner height (IBH) in a radial direction of the helical reinforcement bead (31, 41).

2. An arrangement according to claim 1, wherein the distance (SL) from the at least one protrusion (12, 12A-E) is larger than the inner height (IBH) of the helical reinforcement bead (31, 41).

3. An arrangement according to any preceding claim, wherein the sealing (10) comprises at least two protrusions (12, 12A-E).

4. An arrangement according to any preceding claim, wherein the sealing (10) comprises at least two outer portions (13, 13A-J, 14).

5. An arrangement according to claim 4, wherein the sealing (10) comprises at least two free ends (14).

6. An arrangement according to any preceding claim, wherein the outer portion (13, 13A-J) extends in a direction deviating from the extension plane of the associated protrusion (12, 12A-E).

7. An arrangement according to any preceding claim, wherein at least one outer portion (13, 13A-J, 14) is arranged at each end of each protrusion (12, 12A-E).

8. An arrangement according to any of the claims 4 to 7 when claims 6 and 7 are dependent on claim 3, wherein a first outer portion (13, 13A-J) at the end of a first protrusion (12A, 12C) extends in another direction in relation to a second outer portion (13B-J, 14) arranged at the end of a second protrusion (12B, 12D).

9. An arrangement according to any of the claims 3 to 8, wherein the outer portions (13, 13A-J, 14) at the ends of the protrusions (12, 12A-E) extend in opposite directions in relation to each other.

10. An arrangement according to any of the claims 3 to 9, wherein the outer portions (13, 13A-J, 14) at the ends of the protrusions (12A-E) have inverted shapes in relation to each other.

11. An arrangement according to any of the preceding claims, wherein the sealing (10) has a height (HS) being about 10-40% larger than a width (WB) of the base (11, 11A, 11B) of the sealing (10).

12. An arrangement according to claim 11, wherein each outer portion (13, 13A-J) of the sealing (10) has a length (LB) being at least 30 to 60% of the height (HS) of the sealing (10).

13. An arrangement according to any of the preceding claims, wherein the sealing (10) has a width (WB) of the base (11, 11A, 11B) of the sealing being about 10-50% less than a width (WE) of the sealing (10) as measured at the level of the outer portion (13, 13A-J, 14) in parallel with the sealing base.

## Patentansprüche

1. Anordnung, die mindestens einen Außenlüftungskanal (3, 4), mindestens einen Lüftungskanalbeschlag (5, 20) und mindestens eine Dichtung (10) zur Abdichtung einer Fuge zwischen dem mindestens einen Lüftungskanalbeschlag und dem mindestens einen Außenlüftungskanal umfasst, wobei jeder Außenlüftungskanal mindestens einen spiralförmig verlaufenden Verstärkungswulst (31, 41) umfasst und die Dichtung (10) sich kontinuierlich um den Außenumfang mindestens eines Endes (22, 23) des Lüftungskanalbeschlags erstreckt, **dadurch gekennzeichnet, dass** die Dichtung (10) mindestens einen Vorsprung (12, 12A-E) umfasst, der sich vom Außenumfang des Lüftungskanalbeschlags (5, 20) nach außen erstreckt, zur Abdichtung gegen den Innenumfang des Außenlüftungskanals (3, 4), und mindestens einen Außenabschnitt (13, 13A-J, 14) am Vorsprung, wobei der Vorsprung und sein Außenabschnitt eingerichtet sind, um mit dem Innenumfang des Lüftungskanals und einem Innenumfang des Verstärkungswulstes an der Fuge physisch und kontinuierlich in Kontakt zu kommen, welcher Verstärkungswulst (31, 41) einen spiralförmig variierenden Durchmesser des Außenlüftungskanals bildet, wodurch die Dichtung (10) eingerichtet ist, um eine luftdichte Abdichtung der Fuge zwischen dem Lüftungskanalbeschlag, dem Innenumfang des Außenlüftungskanals und dem spiralförmig variierenden Innenkanalumfang des Verstärkungswulstes mittels des Vorsprungs (12, 12A-E) zu erreichen und dessen Außenabschnitt (13, 13A-J, 14) sich in unterschiedliche Richtungen erstreckt, wobei jeder Außenabschnitt (13, 13A-J) mindestens ein freies Ende (14) aufweist, das in einem Abstand (SL) vom Vorsprung (12, 12A-E) angeordnet ist, welcher Abstand (SL), gemessen entlang einer im Wesentlichen parallel zur Längsrichtung des Lüftungskanalbeschlags (5, 20) verlaufenden Ebene, zumindest gleich einer Innenhöhe (IBH) in radialer Richtung des spiralförmigen Verstärkungswulstes (31, 41) ist.

2. Anordnung nach Anspruch 1, wobei der Abstand (SL) von dem mindestens einen Vorsprung (12, 12A-E) größer ist als die Innenhöhe (IBH) des spiralförmigen Verstärkungswulstes (31, 41).

3. Anordnung nach einem der vorhergehenden Ansprüche, wobei die Dichtung (10) mindestens zwei Vorsprünge (12, 12A-E) umfasst.

4. Anordnung nach einem der vorhergehenden Ansprüche, wobei die Dichtung (10) mindestens zwei Außenabschnitte (13, 13A-J, 14) umfasst.

5. Anordnung nach Anspruch 4, wobei die Dichtung (10) mindestens zwei freie Enden (14) umfasst.

6. Anordnung nach einem der vorhergehenden Ansprüche, wobei sich der Außenabschnitt (13, 13A-J) in einer Richtung erstreckt, die von der Erstreckungsebene des zugeordneten Vorsprungs (12, 12A-E) abweicht.

7. Anordnung nach einem der vorhergehenden Ansprüche, wobei an jedem Ende jedes Vorsprungs (12, 12A-E) mindestens ein Außenabschnitt (13, 13A-J, 14) angeordnet ist.

8. Anordnung nach einem der Ansprüche 4 bis 7, wenn die Ansprüche 6 und 7 von Anspruch 3 abhängig sind, wobei ein erster Außenabschnitt (13, 13A-J) am Ende eines ersten Vorsprungs (12A, 12C) sich in Bezug auf einen zweiten Außenabschnitt (13B-J, 14), der am Ende eines zweiten Vorsprungs (12B, 12D) angeordnet ist, in einer anderen Richtung erstreckt.

9. Anordnung nach einem der Ansprüche 3 bis 8, wobei die Außenabschnitte (13, 13A-J, 14) sich an den Enden der Vorsprünge (12, 12A-E) in entgegengesetzter Richtung zueinander erstrecken.

10. Anordnung nach einem der Ansprüche 3 bis 9, wobei die Außenabschnitte (13, 13A-J, 14) an den Enden der Vorsprünge (12A-E) zueinander invertierte Formen aufweisen.

11. Anordnung nach einem der vorhergehenden Ansprüche, wobei die Dichtung (10) eine Höhe (HS) von etwa 10-40% größer als eine Breite (WB) der Basis (11, 11A, 11B) der Dichtung (10) aufweist.

12. Anordnung nach Anspruch 11, wobei jeder Außenabschnitt (13, 13A-J) der Dichtung (10) eine Länge (LB) aufweist, die mindestens 30 bis 60% der Höhe (HS) der Dichtung (10) beträgt.

13. Anordnung nach einem der vorhergehenden Ansprüche, wobei die Dichtung (10) eine Breite (WB) der Basis (11, 11A, 11B) der Dichtung aufweist, die etwa 10-50% kleiner als eine Breite (WE) der Dichtung (10) ist, gemessen in der Höhe des Außenabschnitts (13, 13A-J, 14) parallel zur Dichtungsbasis.

## Revendications

1. Agencement comprenant au moins un conduit de ventilation extérieur (3, 4), au moins un raccord de conduit de ventilation (5, 20) et au moins un dispositif d'étanchéité (10) pour assurer l'étanchéité d'un joint entre l'au moins un raccord de conduit de ventilation et l'au moins un conduit de ventilation extérieur, ledit conduit de ventilation extérieur comprenant au moins un bourrelet de renforcement s'étendant en hélice (31, 41), et le dispositif d'étanchéité (10) s'étendant de manière continue autour de la circonférence extérieure d'au moins une extrémité (22, 23) du raccord de conduit de ventilation, **caractérisé en ce que** le dispositif d'étanchéité (10) comprend au moins une saillie (12, 12A-E) s'étendant vers l'extérieur depuis la circonférence extérieure du raccord de conduit de ventilation (5, 20) pour assurer l'étanchéité contre la circonférence intérieure du conduit de ventilation extérieur (3, 4), et au moins une partie extérieure (13, 13A-J, 14) au niveau de la saillie, dans lequel la saillie et sa partie extérieure sont adaptées pour entrer en contact physique et continu avec la circonférence intérieure du conduit de ventilation et une circonférence intérieure du bourrelet de renforcement au niveau du joint, ledit bourrelet de renforcement (31, 41) formant un diamètre variable en hélice du conduit de ventilation extérieur, le dispositif d'étanchéité (10) étant configuré pour réaliser un joint étanche à l'air du joint entre le raccord de conduit de ventilation, la circonférence intérieure du conduit de ventilation extérieur et la circonférence intérieure du conduit du bourrelet de renforcement variable en hélice au moyen de la saillie (12, 12A-E) et sa partie extérieure (13, 13A-J, 14) s'étendant dans des directions différentes, dans lequel chaque partie extérieure (13, 13A-J) a au moins une extrémité libre (14) disposée à une distance (SL) de la saillie (12, 12A-E), ladite distance (SL), mesurée le long d'un plan essentiellement parallèle à la direction longitudinale du raccord de conduit de ventilation (5, 20), étant au moins égale à une hauteur intérieure (IBH) dans une direction radiale du bourrelet de renforcement hélicoïdal (31, 41).

2. Agencement selon la revendication 1, dans lequel la distance (SL) de l'au moins une saillie (12, 12A-E) est supérieure à la hauteur intérieure (IBH) du bourrelet de renforcement hélicoïdal (31, 41).

3. Agencement selon l'une quelconque des revendications précédentes, dans lequel le dispositif d'étanchéité (10) comprend au moins deux saillies (12, 12A-E).

4. Agencement selon l'une quelconque des revendications précédentes, dans lequel le dispositif d'étanchéité (10) comprend au moins deux parties extérieures (13, 13A-J, 14).

5. Agencement selon la revendication 4, dans lequel le dispositif d'étanchéité (10) comprend au moins deux extrémités libres (14).

6. Agencement selon l'une quelconque des revendications précédentes, dans lequel la partie extérieure (13, 13A-J) s'étend dans une direction s'écartant du plan d'extension de la saillie associée (12, 12A-E).

7. Agencement selon l'une quelconque des revendications précédentes, dans lequel au moins une partie extérieure (13, 13A-J, 14) est agencée à chaque extrémité de chaque saillie (12, 12A-E).

8. Agencement selon l'une quelconque des revendications 4 à 7 lorsque les revendications 6 et 7 sont dépendent de la revendication 3, dans lequel une première partie extérieure (13, 13A-J) à l'extrémité d'une première saillie (12A, 12C) s'étend dans une autre direction par rapport à une deuxième partie extérieure (13B-J, 14) disposée à l'extrémité d'une deuxième saillie (12B, 12D).

9. Agencement selon l'une quelconque des revendications 3 à 8, dans lequel les parties extérieures (13, 13A-J, 14) aux extrémités des saillies (12, 12A-E) s'étendent dans des directions opposées l'une par rapport à l'autre.

10. Agencement selon l'une quelconque des revendications 3 à 9, dans lequel les parties extérieures (13, 13A-J, 14) aux extrémités des saillies (12A-E) ont des formes inversées les unes par rapport aux autres.

11. Agencement selon l'une quelconque des revendications précédentes, dans lequel le dispositif d'étanchéité (10) a une hauteur (HS) étant environ 10 à 40% supérieure à une largeur (WB) de la base (11, 11A, 11B) du dispositif d'étanchéité (10).

12. Agencement selon la revendication 11, dans lequel chaque partie extérieure (13, 13A-J) du dispositif d'étanchéité (10) a une longueur (LB) étant au moins 30 à 60% de la hauteur (HS) du dispositif d'étanchéité (10).

13. Agencement selon l'une quelconque des revendications précédentes, dans lequel le dispositif d'étanchéité (10) a une largeur (WB) de la base (11, 11A, 11B) du dispositif d'étanchéité étant environ 10 à 50% inférieure à une largeur (WE) du dispositif d'étanchéité (10) telle que mesurée au niveau de la partie extérieure (13, 13A-J, 14) en parallèle avec la base du dispositif d'étanchéité.
